Europäisches Patentamt

European Patent Office

Office européen des brevets

(19)

(11) EP 0 781 968 A1

## (12) DEMANDE DE BREVET EUROPEEN

(43) Date de publication:
02.07.1997 Bulletin 1997/27

(51) Int Cl.6: **F24D 17/00**, F24H 9/12

(21) Numéro de dépôt: 96402865.8

(22) Date de dépôt: 23.12.1996

(84) Etats contractants désignés:
AT BE DE ES GB IT NL

(30) Priorité: 26.12.1995 FR 9515478

(71) Demandeur: SAUNIER DUVAL EAU CHAUDE
CHAUFFAGE S.D.E.C.C. - Société anonyme
F-94120 Fontenay sous Bois (FR)

(72) Inventeurs:
• Armand, Jean-Louis
  44470 Carquefou (FR)
• Benabdelkarim, Mohammed
  44000 Nantes (FR)

(74) Mandataire: Lhuillier, René
Cabinet Lepeudry,
52, avenue Daumesnil
75012 Paris (FR)

(54) **Procédé de distribution d'eau chaude sanitaire à partir d'une chaudière à gaz, par l'intermédiaire d'un ballon d'accumulation et dispositif de mise en oeuvre du procédé**

(57) L'embouchure (7) de la canne (6) d'alimentation en eau chaude provenant de la chaudière (3) est localisée à la partie supérieure du ballon d'accumulation (1). Elle coopère avec le capot supérieur du ballon et dispose de moyens tels que des petits orifices, pour la distribution d'eau dans la partie haute sans perturbation de la stratification de l'eau chaude dudit ballon.

Application aux installations de chauffage et production d'eau chaude sanitaire à partir d'une chaudière à gaz.

FIG.1

## Description

L'invention se rapporte aux chaudières à gaz et concerne plus précisément un procédé de distribution d'eau chaude sanitaire par l'intermédiaire d'un ballon d'accumulation ainsi qu'un dispositif particulier de mise en oeuvre dudit procédé.

On sait que les chaudières à gaz sont désignées comme des chaudières mixtes si elles peuvent alimenter un circuit de chauffage mais aussi produire de l'eau chaude sanitaire. Pour produire de l'eau chaude sanitaire en quantité suffisante et à une température désirée en fonction de l'usage, on a recours à deux types de générateurs. Soit un générateur comportant un échangeur instantané apte à fournir de l'eau chaude à la demande en quantité illimitée; soit un ballon d'accumulation recevant de l'eau chaude du générateur et la stockant en une certaine quantité, le puisage s'effectuant directement à partir de ce ballon. La capacité d'eau chaude disponible pour un utilisateur est évidemment directement liée au volume du ballon d'accumulation et aux possibilités de renouvellement du ballon en eau chaude provenant de la chaudière. Quand les besoins sont importants, il est évidemment souhaitable de disposer d'une capacité de stockage importante, mais en plus du coût, cela peut poser des problèmes d'installation et d'encombrement.

La Demanderesse s'est donc attachée à rechercher un procédé et un dispositif de mise en oeuvre du procédé qui permettent d'augmenter notablement la capacité d'eau chaude disponible à partir d'un ballon d'accumulation de dimension réduite, et cela à un débit de puisage donné.

Un objet principal de la présente invention consiste donc en un procédé de distribution d'eau chaude sanitaire à partir d'une chaudière à gaz par l'intermédiaire d'un ballon d'accumulation équipé d'une canne d'alimentation en eau chaude provenant de la chaudière, d'une canne de prélèvement d'eau chaude, ainsi que d'une canne d'admission directe d'eau froide provenant du conduit d'alimentation de la chaudière sur lequel est interposée une pompe de circulation, procédé selon lequel on prélève une quantité d'eau chaude à un débit déterminé inférieur au débit de la pompe de circulation sans perturber la stratification d'eau chaude dans le ballon, ou à un débit supérieur à celui de la pompe de circulation en bénéficiant de la capacité supplémentaire constituée par l'eau stockée dans le ballon.

Un autre objet principal de l'invention consiste en un dispositif de mise en oeuvre dudit procédé, selon lequel l'embouchure de la canne d'alimentation en eau chaude provenant de la chaudière est localisée à la partie supérieure du ballon d'accumulation, ladite embouchure coopérant avec le capot supérieur du ballon et disposant de moyens pour la distribution d'eau dans la partie haute sans perturbation de la stratification d'eau chaude dudit ballon.

Avantageusement, l'embouchure de la canne est orientée vers le haut et se trouve à courte distance du capot supérieur du ballon, et sa partie terminale est pourvue de petits orifices.

D'autres caractéristiques et avantages de l'invention ressortiront de la description qui va suivre d'exemples non limitatifs de réalisation, en faisant référence aux figures qui représentent :

Figure 1 une vue schématique en coupe d'une installation de distribution d'eau chaude sanitaire par l'intermédiaire d'un ballon d'accumulation

Figures 2 et 3 des vues en coupe de la partie supérieure du ballon d'accumulation montrant des variantes de réalisation des cannes d'alimentation et de prélèvement d'eau

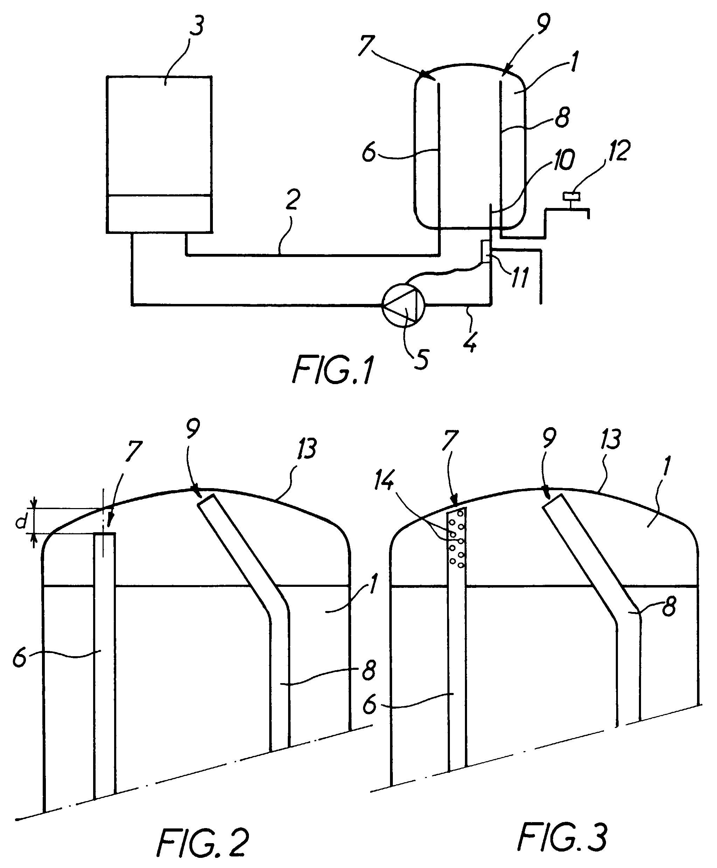

La figure 1 illustre schématiquement un dispositif de production d'eau chaude provenant d'un ballon d'accumulation 1. Le ballon est alimenté en eau chaude par un conduit 2 provenant de la chaudière 3, l'eau froide de remplacement arrivant à la chaudière par un conduit 4 sur lequel est interposée une pompe de circulation 5. Le conduit 2 aboutit à une canne d'alimentation 6 qui pénètre dans le ballon 1. Son embouchure 7 est localisée à la partie supérieure du ballon. Le prélèvement d'eau chaude s'effectue à partir d'une autre canne 8 dont l'embouchure 9 est également à la partie supérieure du ballon, la canne aboutissant à un robinet de puisage extérieur 12. Enfin une troisième canne 10, débouchant cette fois à la base du ballon 1 est raccordée directement au conduit 4 d'arrivée d'eau froide. On notera également qu'une sonde de température 11 placée sur la tubulure d'arrivée d'eau froide et en contact avec le ballon est reliée à la pompe 5.

Le fait que l'embouchure 7 soit placée en partie haute du ballon permet de minimiser les perturbations à ce niveau lors de l'arrivée d'eau chaude par le conduit 2. Ainsi la stratification de l'eau chaude dans le ballon ne se trouve pas perturbée.

Le procédé de fonctionnement de l'installation consiste donc à puiser de l'eau chaude par le robinet 12 à un débit Q recherché. L'eau de ballon est, au fur et à mesure du puisage, totalement ou partiellement renouvelée par un apport d'eau chaude de la chaudière par le conduit 2, et cela à un débit q correspondant à la puissance nominale de la chaudière.

La capacité d'eau chaude recueillie par l'utilisateur peut être supérieure au volume V réel d'eau stockée dans le ballon. Cette capacité, appelée capacité virtuelle $C_v$ est liée aux débits par la formule suivante $C_v = \frac{Q}{Q-q} kV$, k définissant la proportion de volume utile du ballon.

Deux cas peuvent se présenter selon que le débit Q d'eau chaude prélevée est supérieur ou inférieur au débit de la pompe 5.

Dans le cas où le débit Q est inférieur, toute l'eau froide de remplacement passe dans la chaudière 3 et l'eau chaude correspondante est fournie au ballon par la canne d'alimentation 6. Le fait que l'embouchure 7 se trouve en partie haute a pour conséquence que cette eau chaude ne se mélangera pas au volume stocké dans le ballon, mais passera pratiquement directement dans la canne de prélèvement 8.

Dans le cas où le débit Q d'eau prélevée est supérieur au débit de la pompe, la partie d'eau froide en surplus du débit admis par la pompe, alimente la canne 10 qui débouche à la base du ballon. L'eau puisée par la canne 8 provient donc en partie de l'eau chaude émise à l'embouchure 7 comme dans le cas précédent, et en partie par l'eau chaude stockée dans le ballon. Ainsi l'utilisateur peut-il disposer pendant un certain temps d'un volume d'eau chaude supérieur au volume contenu dans le ballon, grâce à la capacité supplémentaire apportée parallèlement par la chaudière.

La sonde de température 11 commande la pompe 5 dès que la température mesurée à la base du ballon est inférieure à la température de consigne, ce qui intervient en début de puisage.

Le système est optimisé lorsque le volume utile RV du ballon est maximum. Il apparaît donc nécessaire que les couches d'eau chaude dans le ballon soient stratifiées et le restent sans être perturbées ni par l'arrivée d'eau chaude provenant de la chaudière, ni par l'arrivée d'eau froide à la base. C'est la raison pour laquelle l'embouchure 7 de la canne d'arrivée d'eau chaude 6 est placée au plus près du capot supérieur du ballon. Ainsi il n'y a entre l'embouchure 7 de la canne 6 et l'embouchure 9 de la canne 8, qu'un volume restreint d'eau en haut du ballon, rendant possible un mélange optimum entre l'eau chaude arrivante et l'eau chaude sortante, en évitant les variations brusques de température.

La figure 2 montre un mode de réalisation avantageux de la position et de la forme des cannes au sommet du ballon. On voit que le capot supérieur 13 du ballon 1 est de forme arrondie et l'embouchure 7 de la canne 6 est orientée vers le haut, en direction de l'arrondi, et à une courte distance d du capot 13.

Ainsi le flux d'eau chaude provenant de la canne peut-il s'étaler le long du capot qui sert de brise-jet et ne perturbe pas la stratification des couches d'eau dans le reste du ballon. On notera que l'embouchure 7 de la canne est avantageusement localisée sensiblement à mi-distance entre le sommet de l'arrondi du capot et la paroi cylindrique du ballon. Pour limiter le volume d'eau chaude susceptible de se mélanger avec l'eau stockée dans le ballon, il est également paru avantageux de donner à la canne de prélèvement 8 une inflexion, de telle sorte que son embouchure 9 soit décalée vers le sommet du capot 13 et orientée en direction de la canne 6.

En variante de réalisation, comme il apparaît à la figure 3, la canne 6 se termine par une embouchure biseautée 7 encore beaucoup plus proche du capot supérieur. Des petits orifices 14 sont prévus sur la partie terminale de la canne pour la distribution d'eau chaude, sans perturbation, dans la partie haute du ballon.

## Revendications

1. Procédé de distribution d'eau chaude sanitaire à partir d'une chaudière à gaz par l'intermédiaire d'un ballon d'accumulation équipé d'une canne d'alimentation en eau chaude provenant de la chaudière, d'une canne de prélèvement d'eau chaude ainsi que d'une canne d'admission directe d'eau froide provenant du conduit d'alimentation de la chaudière sur lequel est interposée une pompe de circulation caractérisé en ce qu'il consiste à prélever une quantité d'eau chaude à un débit inférieur au débit de la pompe de circulation sans perturber la stratification d'eau chaude dans la ballon, ou à un débit supérieur à celui de la pompe de circulation en bénéficiant de la capacité supplémentaire constituée par l'eau stockée dans le ballon.

2. Dispositif de mise en oeuvre du procédé selon la revendication 1, comportant un ballon d'accumulation équipé d'une canne d'alimentation en eau chaude provenant de la chaudière dont l'embouchure est localisée à la partie supérieure du ballon, d'une canne de prélèvement d'eau chaude débouchant à la partie supérieure du ballon, ainsi que d'une canne d'admission directe d'eau froide provenant du conduit d'alimentation de la chaudière sur lequel est interposée une pompe de circulation, caractérisé en ce que l'embouchure (7) de la canne (6) d'alimentation en eau chaude provenant de la chaudière (3) coopère avec le capot supérieur (13) du ballon (1) et/ou dispose de moyens (14) pour la distribution d'eau dans la partie haute sans perturbation de la stratification de l'eau chaude dudit ballon.

3. Dispositif selon la revendication 2 caractérisé en ce que l'embouchure (7) de la canne (6) est orientée vers le haut, se trouve à courte distance d du capot (13) et est localisée sensiblement à mi-distance entre le sommet de l'arrondi du capot et la paroi cylindrique du ballon (1).

4. Dispositif selon la revendication 2 caractérisé en ce que la canne (6) se termine par une embouchure biseautée (7) et sa partie terminale est pourvue de petits orifices (14).

5. Dispositif selon la revendication 2 caractérisé en ce que l'embouchure (9) de la canne de prélèvement d'eau chaude (8) est décalée vers le sommet du capot (13) et orientée en direction de la canne (6).

FIG.1

FIG.2

FIG.3

EP 0 781 968 A1

Office européen
des brevets

**RAPPORT DE RECHERCHE EUROPEENNE**

Numero de la demande

EP 96 40 2865

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR 2 565 333 A (RAFFINAGE CIE FRANCAISE) 6 Décembre 1985 <br> * abrégé; figures * <br> --- | 1,2 | F24D17/00 <br> F24H9/12 |
| X | DE 27 22 888 A (MANTHEY HERBERT) 23 Novembre 1978 <br> * revendications; figures * <br> --- | 1,2 | |
| X | DE 90 02 016 U (SOLVIS ENERGIESYSTEME GMBH) 26 Avril 1990 <br> * revendications; figures * <br> --- | 1,2 | |
| A | US 4 977 885 A (HERWEYER ELEANOR B  ET AL) 18 Décembre 1990 <br> * abrégé * <br> --- | 1,2 | |
| A | DE 14 54 685 A (HUBER) 13 Février 1969 <br> * figures * <br> ----- | 1,2 | |
| | | | **DOMAINES TECHNIQUES RECHERCHES (Int.Cl.6)** |
| | | | F24D <br> F24H |

Le présent rapport a été établi pour toutes les revendications

| Lieu de la recherche | Date d'achèvement de la recherche | Examinateur |
|---|---|---|
| LA HAYE | 1 Avril 1997 | Van Gestel, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

5